# FASCICULE DE BREVET EUROPEEN

(11) **EP 0 843 241 B1**
(45) Date de publication et mention de la délivrance du brevet: **24.07.2002**
(21) Numéro de dépôt: 97810821.5
(22) Date de dépôt: 03.11.1997
(51) Int. Cl.: G05B 19/10

(54) **Dispositif de commande d'action et procédé d'initialisation du dispositif**
Betriebssteuerungsgerät und Initialisationsverfahren dafür
Actuation control device and method of initialisation of the device

(30) Priorité: 15.11.1996 FR 9613975
(43) Date de publication de la demande: 20.05.1998
(73) Titulaire: SOMFY, F-74300 Cluses (FR)
(72) Inventeur: Häring, Rolf, 72116 Mössingen (DE); Sommer, Bernhard, 72585 Riederich (DE)
(74) Mandataire: Meylan, Robert Maurice

(56) Documents cités:
- GB-A- 2 245 994
- US-A- 4 677 541
- US-A- 4 852 051
- US-A- 5 511 943

## Description

L'invention concerne un dispositif de commande d'action et un procédé d'initialisation du dispositif.

Des dispositifs programmables à horloge de commande d'actions, tels que des réveils matin ou des interrupteurs de dispositifs d'occultation de baies vitrées, comme des stores, sont connus dans l'art antérieur. Ces dispositifs permettent la programmation de l'exécution d'une ou plusieurs actions déterminées à une heure déterminée ou à plusieurs heures différentes. Par exemple, dans le cas d'un réveil, l'utilisateur peut programmer une sonnerie du réveil à une heure fixe ou deux sonneries à des heures différentes. Pour un dispositif d'occultation de baie vitrée comme des stores, les actions programmées peuvent être l'ouverture des stores à une heure précise du matin et la fermeture à une autre heure précise en fin de journée. En été, il peut même être avantageux de programmer une ouverture le matin, une fermeture vers midi, une nouvelle ouverture en fin d'après midi et enfin une fermeture le soir.

Ces dispositifs connus comportent en général plusieurs interfaces homme/machine, dont en particulier un clavier et un écran, pour permettre d'une part à l'utilisateur d'entrer les heures de consigne à programmer et d'autre part de les visualiser, à titre de contrôle.

De manière générale, la programmation de ces dispositifs s'effectue de la manière suivante: l'utilisateur met l'appareil en question dans un mode de programmation par une action spécifique sur celui-ci, ensuite l'utilisateur entre l'heure à mémoriser et finalement par une autre action sur le dispositif valide l'heure ainsi programmée.

Un inconvénient de ces dispositifs et de leurs procédés de programmation réside dans ces interfaces homme/machine sur lesquelles l'utilisateur doit entrer les heures de consigne et les vérifier.

La demande de brevet GB 2 245 994 (A) décrit un autre type de dispositif pour la commande centralisée de chauffage comprenant un boîtier d'interface avec deux paires de boutons pour activer ou désactiver le chauffage deux fois par jour. L'action d'un des boutons -indépendamment de sa durée- provoque automatiquement la mémorisation de l'heure. La commande associée à ce bouton sera exécutée à la même heure du jour suivant. Les boutons sont destinés seulement à la programmation et non à la commande manuelle. Deux autres boutons servent à changer temporairement l'état du chauffage sans modifier les heures programmées: l'un pour inverser la commande actuelle du système et l'autre pour prolonger d'une durée prédéterminée l'état dans lequel le système se trouve.

Le but de l'invention est de simplifier le dispositif de commande et son procédé d'initialisation. Ce but est atteint par le dispositif de la revendication 1 et par le procédé de la revendication 8.

Le dispositif de commande selon l'invention comprend: un boîtier, au moins deux boutons commandant chacun une action, des entrées/sorties, un calculateur, des moyens de mémoire, une alimentation électrique, une horloge, et il est caractérisé en ce qu'il comporte en outre au moins trois chronomètres, le premier de ces chronomètres étant initialisé et activé par un appui sur l'un desdits boutons de commande et mesurant la durée dudit appui, et chacun des autres chronomètres étant associé à l'action commandée par l'un des boutons de commande par l'intermédiaire du calculateur, de sorte que si la durée d'appui sur le bouton de commande est égale ou supérieure à une consigne prédéterminée, le chronomètre associé à l'action du bouton de commande actionné est initialisé et activé pour effectuer des cycles de comptage répétés d'une durée prédéterminée, cadencés par l'horloge, au terme de chacun desquels l'action à laquelle le chronomètre est associé est commandée sur la sortie du dispositif.

Le procédé d'initialisation selon l'invention comporte les étapes suivantes:
(a) action de l'utilisateur sur l'un des boutons de commande de l'appareil,
(b) mesure de la durée de l'action de l'utilisateur au moyen d'un premier chronomètre,
(c) comparaison de la durée de l'action avec une consigne prédéterminée,
(d) dès que la durée de l'action sur le bouton est au moins égale à la durée de la consigne prédéterminée, initialisation et activation d'un cycle de comptage d'un chronomètre associé à l'interrupteur actionné,
(e) comparaison de la valeur de comptage du chronomètre initialisé et activé avec la valeur d'un cycle de comptage prédéterminé,
(f) dès que la valeur de comptage est égale à la valeur du cycle de comptage prédéterminé, initialisation et activation du chronomètre pour un nouveau cycle de comptage,
(g) envoi de la commande associée à l'interrupteur actionné.

Un avantage de l'invention est que l'utilisateur n'a plus besoin de programmer les heures de commande dans le dispositif lui-même. Le moment de référence est celui auquel il procède à la programmation et les chronomètres ayant des cycles de comptage de 24 heures, la commande initialisée est répétée toutes les 24 heures. De plus, le coût du dispositif est réduit puisque les interfaces homme/machine sont supprimées.

Le dispositif et le procédé de programmation seront mieux compris à l'aide de la description de trois modes d'exécution et des figures qui s'y rapportent.

La figure 1 est un schéma-bloc d'un dispositif selon l'invention commandant un volet roulant.

La figure 2 est l'organigramme du procédé de commande directe.

La figure 3 est l'organigramme du procédé de d'initialisation d'un cycle de commande.

La figure 4 est l'organigramme d'un cycle de commande de montée.

La figure 5 est l'organigramme d'un cycle de commande de descente.

La figure 6 est un schéma bloc d'un deuxième mode d'exécution de l'invention.

La figure 7 est l'organigramme d'une procédure utilisée lors de la mise sous tension du deuxième mode d'exécution.

La figure 8 est un organigramme du procédé de d'initialisation de cycles de commande selon le deuxième mode d'exécution.

La figure 9 est l'organigramme des cycles de commande de montée ou de descente selon le deuxième mode d'exécution.

La figure 10 est le schéma bloc d'un exemple selon le deuxième mode d'exécution avec des valeurs numériques.

La figure 11 est un schéma bloc d'un troisième mode d'exécution de l'invention.

La figure 12 est un organigramme du procédé de d'initialisation des chronomètres selon le troisième mode d'exécution de l'invention.

La figure 13 est un organigramme d'un cycle de commande de montée selon le troisième mode d'exécution.

La figure 14 est un organigramme d'un cycle de commande de descente selon le troisième mode d'exécution.

La figure 15 est une procédure d'initialisation du troisième mode d'exécution.

La figure 16 est un schéma bloc d'un exemple selon troisième mode d'exécution avec des valeurs numériques.

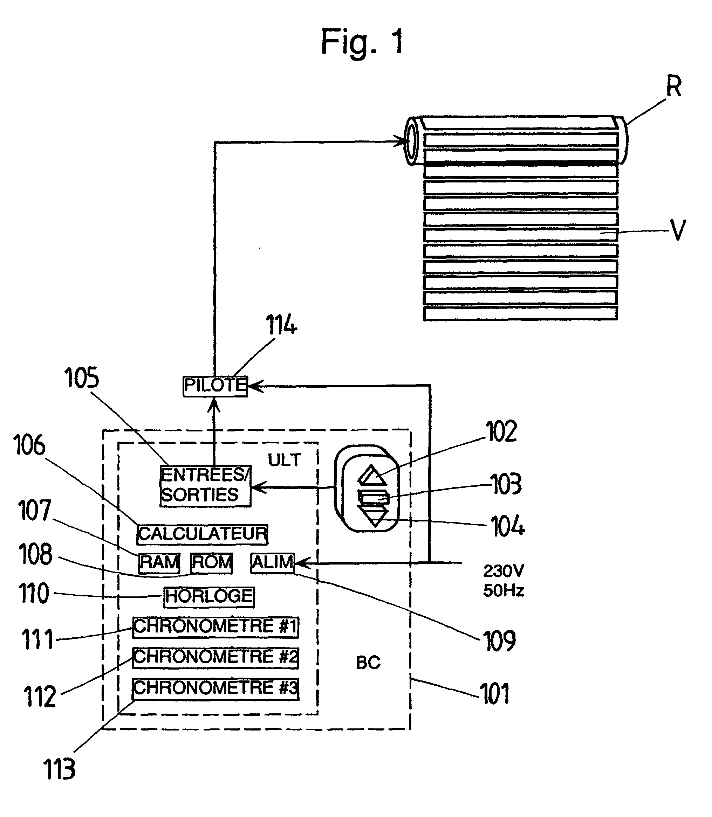

Le dispositif de commande est tout d'abord décrit en référence à la figure 1.

Ce dispositif comprend un boîtier de commande 101 sur lequel se trouvent trois boutons de commande, le premier 102 pour commander la montée, le deuxième 103 pour commander un arrêt et le troisième 104 pour commander la descente. Ces boutons sont reliés dans le boîtier à une unité logique de traitement (ULT) qui comprend une interface d'entrées/sorties 105, un calculateur 106, une mémoire RAM 107, une mémoire ROM 108, une alimentation 109 et une horloge 110. L'unité logique de traitement comporte en outre trois chronomètres 111, 112 et 113 ayant des fonctions distinctes. Le premier chronomètre 111 permet de déterminer si la durée d'appui de l'utilisateur sur le bouton de commande de montée 102 ou de descente 104 dépasse une consigne déterminée, par exemple 5 secondes. Si la durée d'appui dépasse la consigne, alors un cycle de commande d'action, de montée si l'utilisateur appuie sur le bouton de commande de montée ou de descente si l'utilisateur appuie sur le bouton de commande de descente, est initialisé et activé sur le chronomètre 112 pour la montée ou sur le chronomètre 113 pour la descente respectivement par le calculateur 106. Une fois qu'un cycle de comptage est initialisé et activé sur l'un des chronomètres 112 ou 113, ce chronomètre compte pour la durée d'un cycle, par exemple 24 heures, de manière répétitive. A la fin du cycle de comptage, le chronomètre est en effet initialisé et activé à nouveau pour un cycle de comptage et l'action est commandée à la sortie du dispositif sur le pilote 114 du volet roulant V.

A aucun moment l'utilisateur ne doit donc entrer une heure de commande déterminée dans le dispositif, et puisque le cycle de comptage est de 24 heures, une même commande (montée ou descente dans ce cas) s'exécutera toutes les 24 heures par rapport à l'heure à laquelle l'utilisateur aura effectivement initialisé le chronomètre.

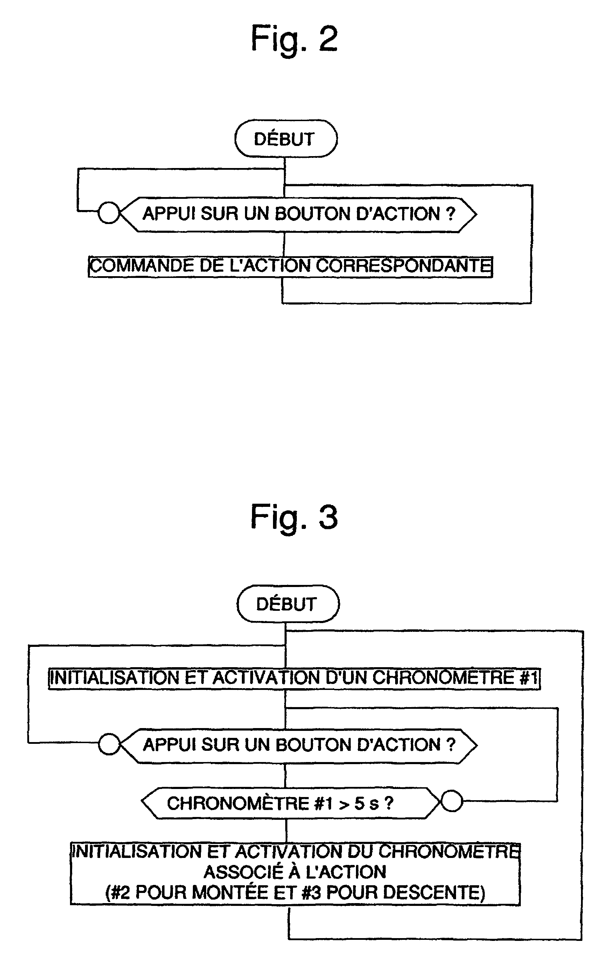

Le procédé de commande manuel est décrit en référence à la figure 2. Dans ce procédé, la commande correspondant au bouton actionné par l'utilisateur est directement envoyée sur la sortie du dispositif. De manière avantageuse, un bouton permettant de choisir un mode de commande manuel ou automatique peut être en outre prévu sur le dispositif.

Le procédé d'initialisation d'un cycle de commande est décrit en référence à la figure 3.

Ce procédé commence par l'appui par l'utilisateur sur un bouton de commande d'action, une montée ou une descente par exemple, et le chronomètre 111 est initialisé et activé. Si la durée d'appui mesurée par le chronomètre 111 dépasse la consigne, par exemple 5 secondes, alors le chronomètre associé au bouton de commande d'action sur lequel l'utilisateur est en train d'appuyer est initialisé et activé pour commencer à compter un cycle de 24 heures. Ainsi, quel que soit son état c'est-à-dire même s'il est en train de compter un cycle, un nouveau cycle est commencé par cette initialisation. A n'importe quel moment, l'utilisateur peut donc recommencer l'initialisation et l'activation du chronomètre associé à une action.

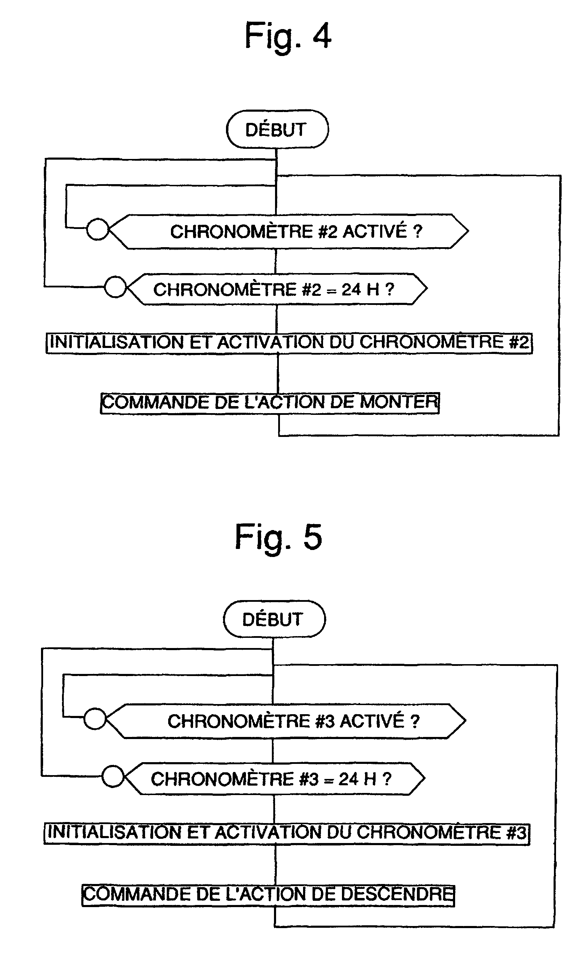

Les procédures de commande de montée, respectivement de descente, sont décrits maintenant en référence aux figures 4 et 5.

Pendant un cycle, le dispositif vérifie que le chronomètre 112 pour la montée, ou 113 pour la descente, est activé. Elle compare ensuite la valeur de comptage de chaque chronomètre activé avec la valeur de consigne du cycle. Dès que cette valeur, 24 heures dans le cas présent, est atteinte pour l'un des chronomètres actifs, celui-ci est initialisé et activé à nouveau, un cycle de comptage recommence, et l'action associée au chronomètre est commandée sur la sortie 105 du dispositif.

De manière similaire, dans la figure 5, le dispositif contrôle si le chronomètre 113 associé à l'action de descente est actif, puis compare sa valeur de comptage avec la valeur de consigne du cycle. Dès que cette valeur est atteinte, le chronomètre 113 associé à l'action de descente est initialisé et activé, un cycle de comptage recommence pour le chronomètre 113, et l'action de descente est commandée sur la sortie du dispositif.

Un cycle de comptage valant 24 heures, chaque cycle commence au moment où il a été initialisé et activé et l'action se répète à la fin de chaque cycle de 24 heures.

Toutes ces procédures sont des tâches qui s'exécutent de manière simultanée et non séquentielle.

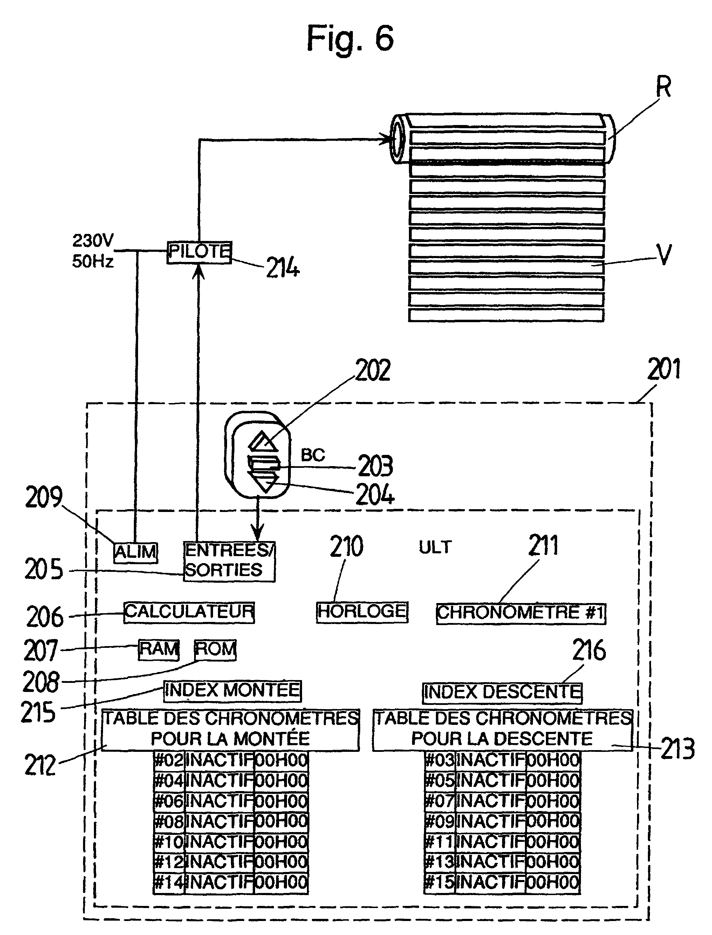

Un second mode d'exécution du dispositif est représenté aux figures 6 à 10. Selon ce second mode, le dispositif est capable de commander plusieurs actions identiques, par exemple plusieurs montées et plusieurs descentes, pendant la durée d'un cycle de comptage. Ce mode d'exécution peut être particulièrement avantageux pour une commande de volet roulant. En effet, en été, il peut être utile de monter le volet roulant tôt le matin, de le descendre vers midi, de le remonter vers le milieu de l'après-midi et finalement de le descendre le soir.

Ce mode est décrit tout d'abord en référence à la figure 6. Le dispositif comporte un boîtier 201, sur lequel des boutons de commande 202, 203 et 204 sont placés. Le bouton 202 est la commande de montée, 203 la commande d'arrêt et 204 la commande de descente. Le boîtier 201 comporte en outre une unité logique de traitement qui comprend des entrées/sorties 205, un calculateur 206, des mémoires RAM 207 et ROM 208, une alimentation électrique 209, une horloge 210, un premier chronomètre 211 destiné à mesurer la durée de l'appui sur un bouton de commande 202 ou 204. L'unité logique comporte encore une table 212 des chronomètres pour la montée et une table 213 des chronomètres pour la descente. Les moyens d'adressage pour accéder aux différents chronomètres sont constitués par un index de montée 215 et un index de descente 216. Ce mode se différencie du premier mode principalement par le nombre de chronomètres utilisés dans les tables 212 et 213. La table 212 des chronomètres pour la montée contient en effet 7 chronomètres, dont les index d'adressage ont les valeurs 2, 4, 6, 8, 10, 12 et 14. De manière similaire, la table des chronomètres pour la descente 213 contient 7 chronomètres dont les index d'adressage ont les valeurs 3, 5, 7, 9, 11, 13 et 15. L'index de montée 215 peut donc prendre les valeurs paires de 2 à 14 et l'index de descente 216 les valeurs impaires de 3 à 15 pour pointer sur chacun des chronomètres.

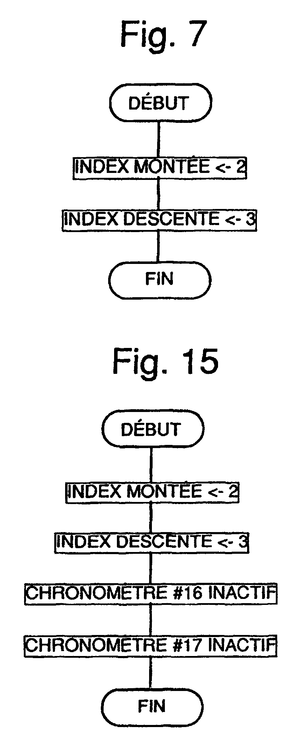

Une procédure d'initialisation du dispositif lors de sa mise sous tension est représentée en figure 7. Dans cette procédure qui n'est active que lors de cette mise sous tension, les index de montée et de descente 215, 216 sont initialisés de manière à pointer sur le premier des chronomètres de chaque table 212, 213. Ils ont donc les valeurs 2 et 3 respectivement. Cette procédure peut être programmée dans le calculateur.

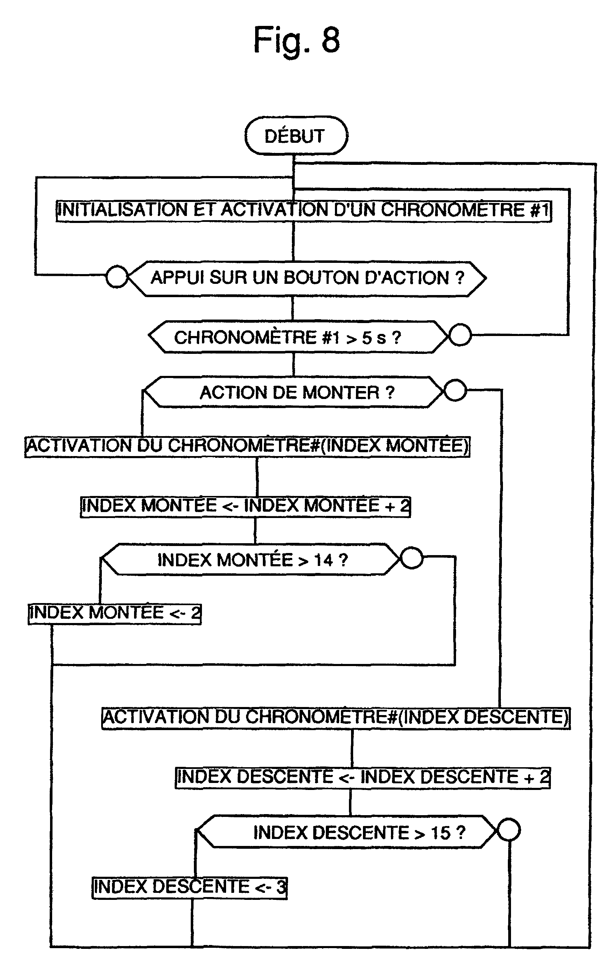

Le procédé d'initialisation de plusieurs cycles de commande est décrit en référence à la figure 8.

Ce procédé commence comme celui représenté en figure 3, par un appui par un utilisateur sur un bouton de commande d'action. Cet appui initialise et active le premier chronomètre mesurant la durée d'appui, ce qui permet de passer à l'initialisation de cycles si l'appui dépasse 5 secondes. Dans ce cas, le calculateur détermine quel est le type d'action choisi par l'utilisateur, c'est-à-dire une montée ou une descente. Si l'utilisateur a déclenché ce procédé par un appui sur le bouton de commande de montée, alors le dispositif initialise et active le chronomètre sur lequel pointe l'index de montée. Cet index pointe toujours sur le premier chronomètre qui n'est pas activé. En effet, lors de la première utilisation du dispositif, la procédure représentée à la figure 7 initialise les index pour qu'ils pointent sur les premiers index des tables. Si des chronomètres ont déjà été initialisés et actives, les index sont incrémentés de 2 après chaque initialisation et activation de chronomètre de sorte que le pointeur se déplace dans la table des chronomètres. Dès que la valeur de l'index dépasse la valeur maximale possible pour une table donnée, dans le cas présent 14 pour la montée ou 15 pour la descente, il est réinitialisé à la valeur pointant sur le premier des chronomètres de la table.

Si le bouton activé par l'utilisateur est le bouton de descente, alors de la même manière que pour la montée, le chronomètre sur lequel l'index pointait est initialisé et activé, l'index est ensuite incrémenté de 2 et si cette valeur dépasse 15, l'index est initialisé à la valeur correspondant au premier chronomètre de la table de descente.

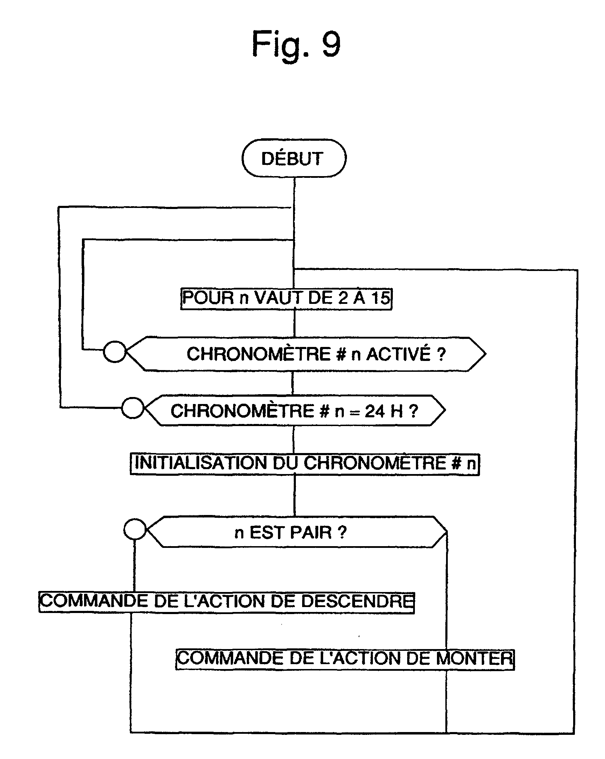

La procédure commandant les cycles de commande de montée, respectivement de descente, du deuxième mode de réalisation sont décrits en référence à la figure 9.

Cette procédure comprend d'abord une instruction permettant de sélectionner tous les chronomètres les uns après les autres. Puis la procédure teste si le chronomètres sélectionné est actif et si la réponse est négative, on retourne au début de la procédure pour la recommencer avec le chronomètre suivant. Si la réponse est positive, on teste la valeur de comptage de celui-ci. Tant que cette valeur n'est pas égale à 24 heures, la procédure recommence du début pour le chronomètre suivant. Dès que la valeur de comptage atteint 24 heures, le chronomètre sélectionné est initialisé, la parité de son index est déterminée et si l'index est pair, la commande de montés est envoyée, tandis que si il est impair, la commande de descente est envoyée. La procédure boucle ensuite et recommence pour le chronomètre suivant.

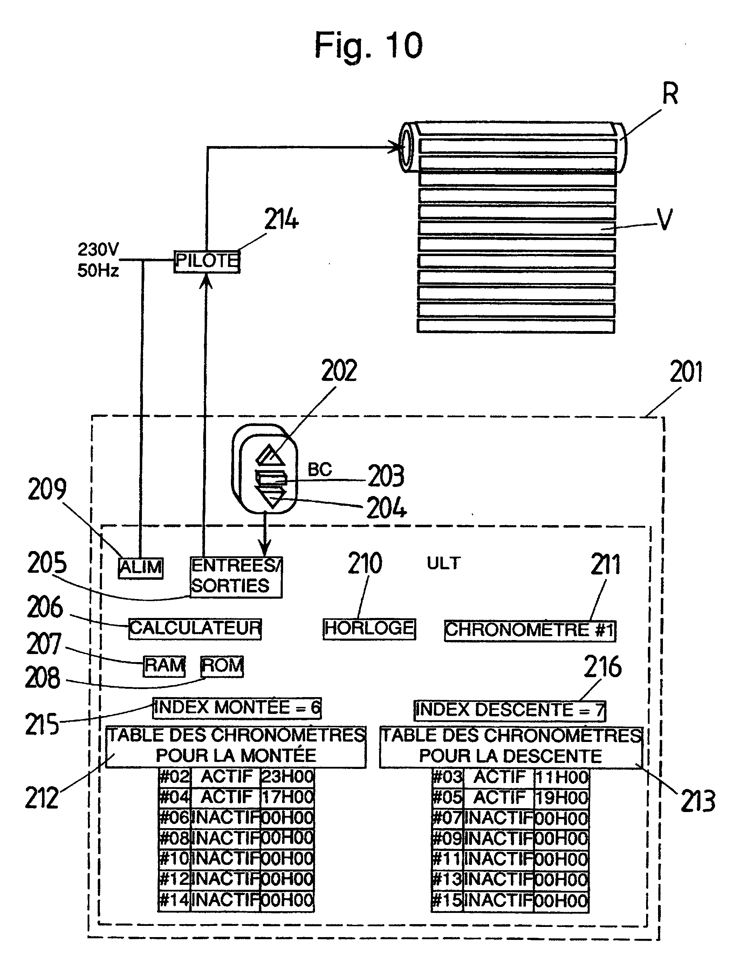

La figure 10 représente un exemple avec des valeurs numériques du dispositif de la figure 6 pour la commande d'un volet roulant V. Les différents éléments correspondants ont donc les mêmes références. Il est 7 heures du matin, l'utilisateur a initialisé des montées du volet roulant V à 8 heures du matin et à 2 heures de l'après-midi, et des descentes du volet roulant V à midi et à 8 heures du soir. Dans la table de montée 212, le premier chronomètre et le deuxième chronomètre sont donc actifs, puisque deux actions de montée ont été initialisées, et ils ont une valeur de comptage de 23 heures et de 17 heures. Dans la table de descente 213, le premier et le deuxième chronomètre sont également actifs et ils ont les valeurs de comptage de 19 heures et 11 heures respectivement. La prochaine action qui va s'exécuter est par conséquent une montée puis que le prochain chronomètre qui va terminer son cycle de comptage de 24 heures est le premier chronomètre de montée.

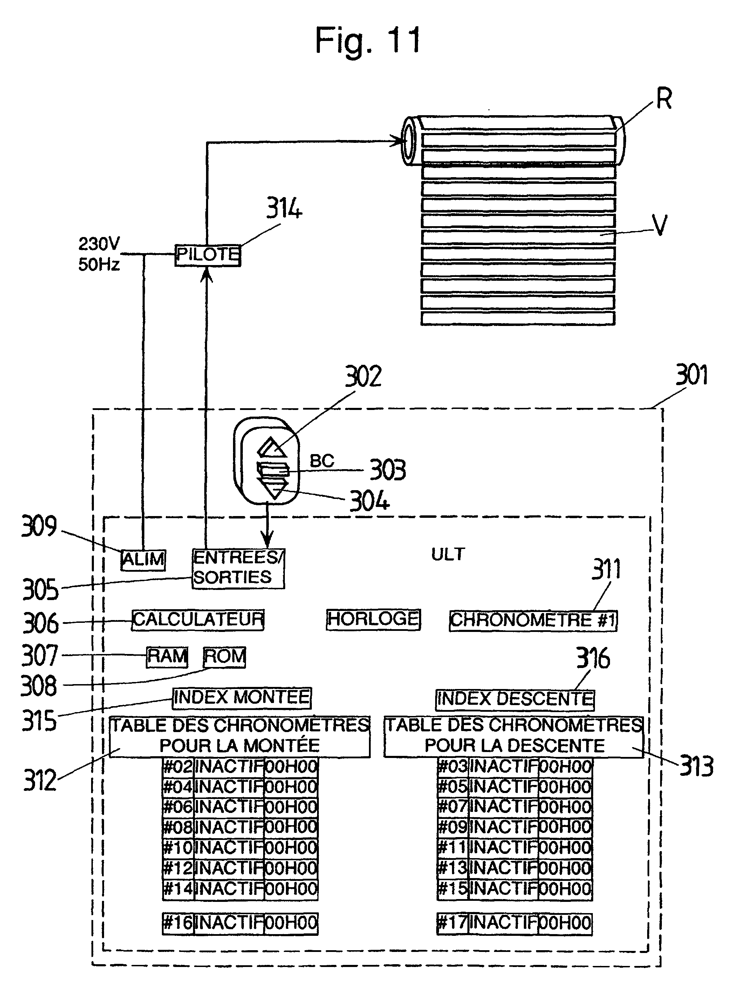

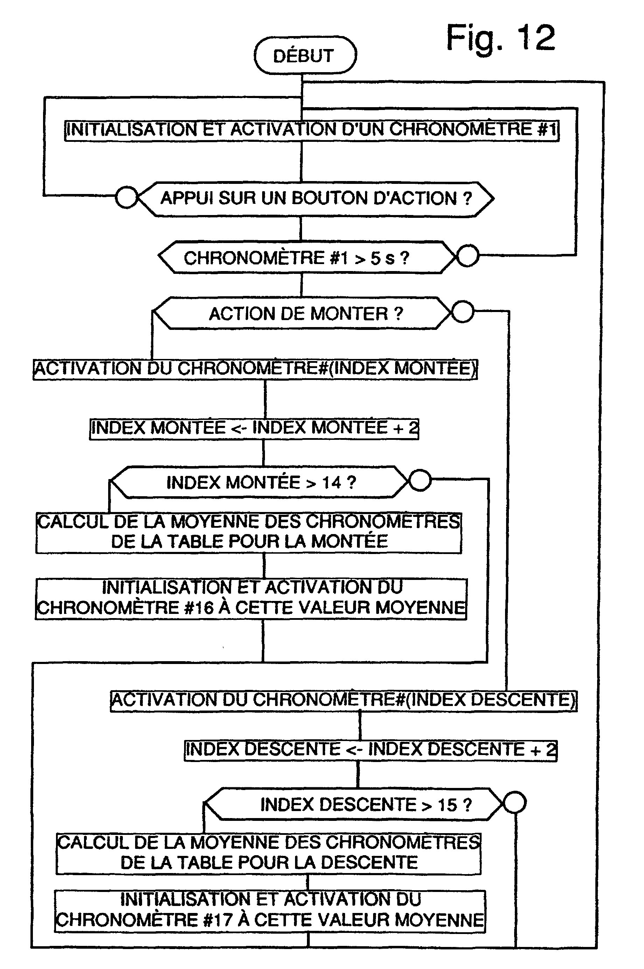

Le troisième mode d'exécution de l'invention est décrit en référence aux figures 11 et 12.

Dans ce mode, le dispositif est capable de calculer une moyenne des valeurs de comptage sur une semaine. Pour simplifier, ce mode sera d'abord décrit en considérant que seulement deux action différentes seront initialisées pendant la durée d'un cycle de comptage, comme dans le premier mode d'exécution décrit ci-dessus.

De manière similaire au modes d'exécution précédents, le dispositif comprend un boîtier 301, sur lequel des boutons de commande 302, 303 et 304 sont placés. Le bouton 302 est la commande de montée, 303 la commande d'arrêt et 304 la commande de descente. Le boîtier 301 comporte en outre une unité logique de traitement qui comprend des entrées/sorties 305, un calculateur 306, des mémoires RAM 307 et ROM 308, une alimentation électrique 309, une horloge 310, un premier chronomètre 311 destiné à mesurer la durée de l'appui sur un bouton de commande 302 ou 304. L'unité logique comporte encore une table 312 des chronomètres pour la montée et une table 313 des chronomètres pour la descente. Les moyens d'adressage pour accéder aux différents chronomètres sont constitués par un index de montée 315 et un index de descente 316. Chaque table 312 et 313 de chronomètres comporte en particulier huit chronomètres en tout, dont les sept premiers correspondent chacun à un jour de la semaine et le huitième sur lequel la moyenne des valeurs de comptage des sept chronomètres précédents sera initialisée.

La procédure d'initialisation et de calcul de la moyenne est représentée à la figure 12. L'initialisation débute comme décrit précédemment par un appui sur un bouton d'action du dispositif, appui qui déclenche le chronomètre 311. Si cet appui dépasse 5 secondes, le système détermine si le bouton actionné est un bouton de montée ou de descente. Ensuite, le chronomètre sur lequel pointe l'index de montée ou de descente est initialisé et activé et il commence un cycle de comptage. L'index est incrémenté et sa valeur testée. Tant que cette valeur est inférieure ou égale à 14 pour la montée ou 15 pour la descente, la procédure d'initialisation recommence pour les chronomètre suivants. Dès que la valeur de l'index incrémentée est supérieure à 14 ou 15, cela signifie que la table est pleine et que les sept chronomètres ont été initialisés et activés. Dans ce cas, le calculateur 306 calcule l'écart moyen des valeurs de comptage des sept chronomètres de la table de montée et celle des sept chronomètres de la table de descente. Les deux écarts moyens obtenus sont ensuite utilisées pour initialiser et activer le huitième chronomètre de chaque table en tenant compte de cet écart moyen. Les actions sont alors commandées par les cycles de comptage de ces derniers chronomètres.

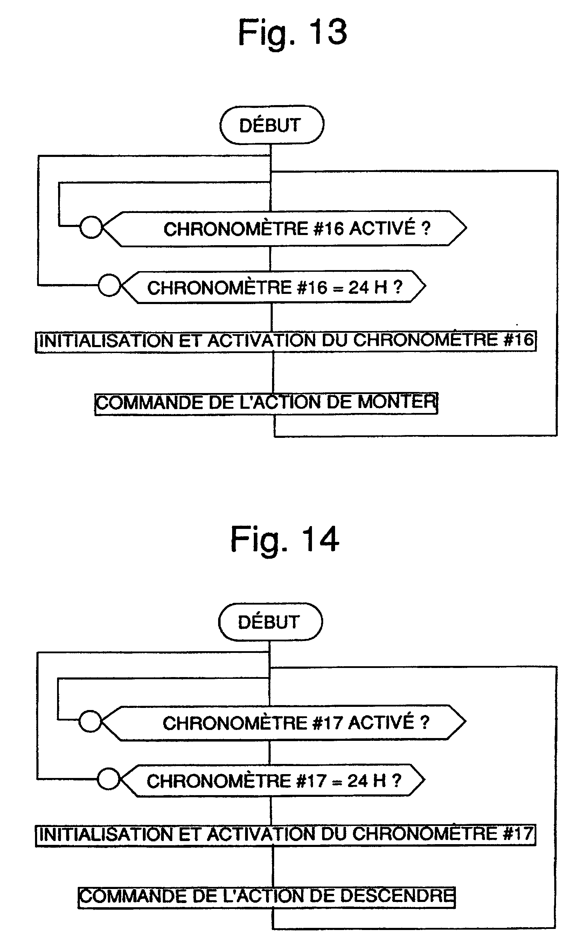

Les procédures de commande du troisième mode d'exécution sont décrites en référence aux figures 13 et 14. Ces procédures sont similaires au procédures des figures 4 et 5.

A la figure 13, cas de l'action de monter, le dispositif détermine d'abord si le huitième chronomètre a été activé. Dès que ce test est affirmatif, il teste la valeur de comptage du chronomètre. Tant que cette valeur n'est pas égale à 24 heures, la procédure recommence. Dès que cette valeur est égale à 24 heures, le huitième chronomètre est initialisé et activé l'action de monter est commandée sur la sortie du dispositif.

De manière similaire, le cas de l'action de descendre est représenté à la figure 14. L'activation du huitième chronomètre est tout d'abord testée puis la valeur de comptage de ce chronomètre s'il est actif. Dès que cette valeur est égale à 24 heures, le chronomètre est initialisé et activé et l'action de descendre est commandée sur la sortie du dispositif.

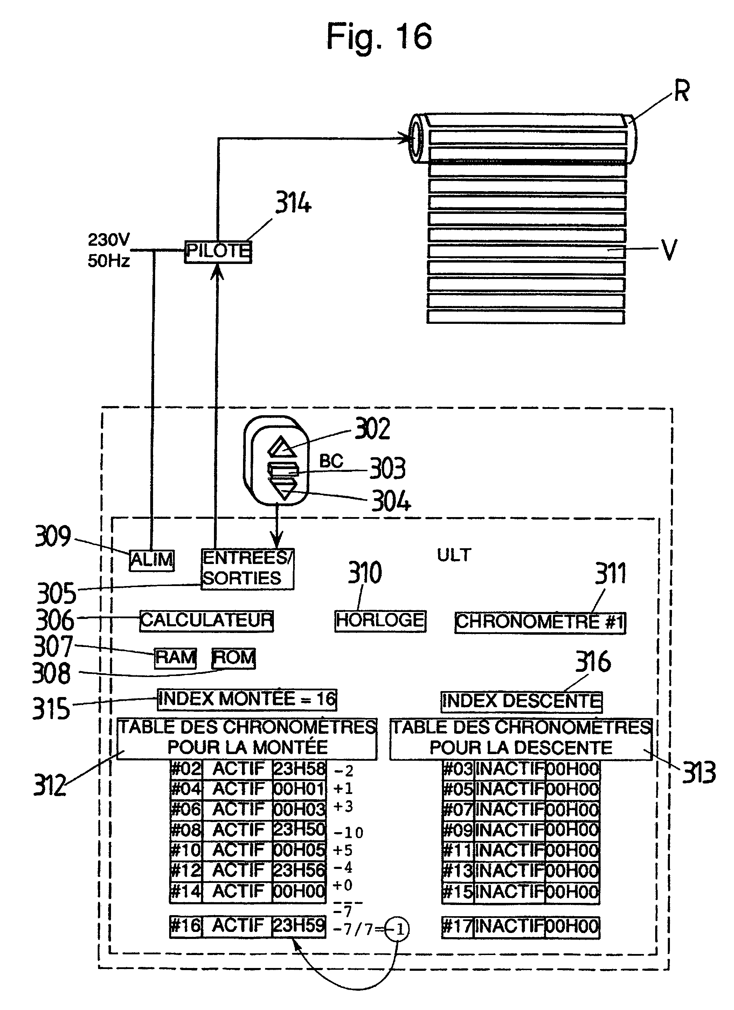

La figure 15 représente la procédure d'initialisation des index et des huitièmes chronomètres. Cette procédure n'est en principe active qu'une seule fois lors de la mise sous tension du dispositif. Selon cette procédure, les index sont initialisés respectivement à la valeur 2 pour l'index de montée et 3 pour l'index de descente. De plus, le huitième chronomètre de chaque table est désactivé de sorte que la procédure d'initialisation des sept chronomètres de chaque table, décrite ci-dessus en référence à la figure 12, peut être exécutée. Cette procédure est utile d'une part lors de la première mise en service du dispositif et d'autre part pour effacer les valeurs moyennes de comptage en vigueur.

Un exemple numérique de calcul d'écart moyen est décrit en référence à la figure 16 pour la commande d'un volet roulant V.

Dans cet exemple, à titre de simplification, le calcul ne se fera que pour une table de chronomètres pour la montée 312 d'un volet roulant V, mais cet exemple est transposable sans autre au cas de la descente du volet roulant V.
En tenant compte de ce qui a été décrit ci-dessus, l'index de montée 315 doit pointer sur le dernier chronomètre de la table de montée, donc le huitième, pour que le dispositif calcule la valeur moyenne de comptage. Par rapport à une heure d'initialisation donnée, les sept chronomètres correspondant à chaque jour de la semaine ont tous une valeur de comptage différente dans leur cycle de 24 heures puisqu'ils n'ont pas été initialisés à la même heure chaque jour. Le calculateur 306 détermine la somme des écarts en heures et en minutes (-2 pour le premier chronomètre, +1 pour le deuxième, + 3 pour le troisième, -10 pour le quatrième etc.) divise cette somme par le nombre de chronomètres (7 dans ce cas), et initialise le huitième chronomètre tenant compte de cet écart moyen. Dans le cas représenté, l'écart moyen vaut -1, et la valeur de comptage avec laquelle le huitième compteur est initialisé est par conséquent 23H59. Le volet roulant V va donc monter dans une minute.

Ce mode d'exécution dans lequel une valeur moyenne de comptage est calculée peut être généralisé à un mode d'exécution dans lequel plusieurs actions identiques sont à exécuter chaque jour de la semaine Ce mode d'exécution correspondrait à une combinaison du deuxième et du troisième mode d'exécution. Dans ce cas, la table des chronomètres aura une forme matricielle, avec par exemple huit colonnes (une par jour de la semaine et la huitième colonne pour les valeurs moyennes), et au moins autant de lignes que le nombre de fois qu'une action doit être commandée pendant la durée d'un cycle de comptage. Dans ce cas, l'écart moyen se calculera pour chaque ligne de la matrice, ligne correspondant à une même action mais à un jour différent. Le système d'adressage devra par conséquent être modifié pour permettre un accès à chaque chronomètre individuel dans la table.

Les différents modes d'exécution décrits le sont à titre d'exemple et des variations dans le cadre de la protection revendiquée sont possible. Par exemple, la taille des tables de chronomètres peut être changée. Ou encore, ce dispositif de commande ne se limite à la commande d'un volet roulant mais d'autres applications, dans lesquelles une commande déterminée se répète de manière cyclique, sont possibles.

## Revendications

1. Dispositif de commande comportant un boîtier (101,201,301), au moins deux boutons (102,104,202,204, 302,304) commandant chacun une action, des entrées/sorties (105,205,305), un calculateur (106,206, 306), des moyens de mémoire (107,108,207,208,307,308), une alimentation électrique (109,209,309), une horloge (110,210,310), ledit dispositif étant **caractérisé en ce qu'**il comporte en outre au moins trois chronomètres (111,112,113,211,311), le premier (111,211,311) de ces chronomètres étant initialisé et activé par un appui sur l'un desdits boutons de commande (102,104,202,204,302,304) et mesurant la durée dudit appui, et chacun des autres chronomètres (112,113) étant associé à l'action commandée par l'un des boutons de commande par l'intermédiaire du calculateur (106,206,306), de sorte que si la durée d'appui sur le bouton de commande est égale ou supérieure à une consigne prédéterminée, le chronomètre (112,113) associé à l'action du bouton de commande actionné est initialisé et activé pour effectuer des cycles de comptage répétés d'une durée prédéterminée, cadencés par l'horloge (110,210,310), au terme de chacun desquels l'action à laquelle le chronomètre est associé est commandée sur la sortie (105,205,305) du dispositif.

2. Dispositif de commande selon la revendication 1, **caractérisé en ce que** le nombre de chronomètres associés à chaque action est égal au nombre de fois que ladite action doit être commandée pendant un cycle de comptage, et **en ce que** le dispositif comporte en outre des moyens d'adressage (212,213,215,216, 312,313,315,316) commandés par le calculateur permettant de sélectionner chacun desdits chronomètres pour l'initialiser et l'activer afin qu'il exécute des cycles de comptage successifs de sorte que l'action est commandée sur la sortie (205) du dispositif chaque fois que l'un des chronomètres associés termine son cycle de comptage.

3. Dispositif selon la revendication 2, **caractérisé en ce que** le nombre de chronomètres associé à chaque action est égal huit, et **en ce que** à la fin d'un cycle d'adressage des sept premiers chronomètres, le calculateur (306) calcule une moyenne des valeurs de comptage des sept premiers chronomètres attribués à la même action de commande qui sont activés et initialise et active le huitième chronomètre avec cette valeur moyenne de comptage, de sorte que l'action est commandée sur la sortie (305) du dispositif chaque fois que le huitième chronomètre termine un cycle de comptage de valeur prédéterminée.

4. Dispositif selon l'une des revendications précédentes, **caractérisé en ce que** la consigne prédéterminée est de 5 secondes.

5. Dispositif selon l'une des revendications précédentes, **caractérisé en ce que** la durée d'un cycle de comptage est de 24 heures.

6. Dispositif selon l'une des revendications 2 à 5, **caractérisé en ce que** les chronomètres sont placés dans des tables (212,213,312,313).

7. Dispositif selon l'une des revendications précédentes, **caractérisé en ce qu'**il comporte en outre un interrupteur ayant une position de mode manuel et une position de mode automatique, la position en mode manuel désactivant l'influence des chronomètres de sorte que seul un appui effectif sur un bouton (102,104,202,204,302,304) de commande d'action commande une action sur la sortie (105,205,305) du dispositif.

8. Procédé d'initialisation d'un dispositif selon l'une des revendications précédentes, **caractérisé par** les étapes suivantes:
(a) action sur l'un des boutons de commande de l'appareil,
(b) mesure de la durée de l'action de l'utilisateur au moyen d'un premier chronomètre,
(c) comparaison de la durée de l'action avec une consigne prédéterminée,
(d) dès que la durée de l'action sur le bouton est au moins égale à la durée de la consigne prédéterminée, initialisation et activation d'un cycle de comptage d'un chronomètre associé à l'interrupteur actionné,
(e) comparaison de la valeur de comptage du chronomètre initialisé et activé avec la valeur d'un cycle de comptage prédéterminé,
(f) dès que la valeur de comptage est égale à la valeur du cycle de comptage prédéterminé, initialisation et activation du chronomètre pour un nouveau cycle de comptage,
(g) envoi de la commande associée à l'interrupteur actionné.

9. Procédé selon la revendication 8, **caractérisé en ce que** l'étape (d) comporte les étapes intermédiaires suivantes:
(d1) dès que la durée de l'action sur le bouton est au moins égale à la durée de la consigne prédéterminée, détermination de l'action commandée par le bouton activé,
(d2) détermination de la valeur de l'index d'adressage,
(d3) initialisation et activation d'un cycle de comptage du chronomètre sur lequel l'index pointe,
(d4) incrément de l'index,
(d5) si l'index est supérieur à une valeur maximale prédéterminée, réinitialisation de l'index.

10. Procédé selon la revendication 9, **caractérisé en ce que** l'étape intermédiaire (d5) comporte les étapes suivantes:
(1) si l'index est supérieur à une valeur maximale prédéterminée, calcul de l'écart moyen de tous les chronomètres associés à une action,
(2) initialisation et activation d'un chronomètre avec un cycle de comptage tenant compte de l'écart moyen calculé.

11. Procédé selon Tune des revendications 8 à 10, **caractérisé en ce que** la durée de la consigne prédéterminée est de 5 secondes.

12. Procédé selon l'une des revendications 8 à 11, **caractérisé en ce que** la valeur d'un cycle de comptage prédéterminée est de 24 heures.

13. Système de commande de volet roulant, comprenant un moteur entraînant un axe (R) autour duquel s'enroule un volet roulant (V), le système étant **caractérisé en ce qu'**il comprend un dispositif de commande selon l'une des revendications 1 à 7, un pilote (114,214,314) relié à la sortie (105,205,305) du dispositif de commande, le pilote (114,214,314) commandant le moteur en fonction de la commande issue de la sortie (105,205,305) du dispositif de commande.

## Patentansprüche

1. Steuerungsgerät mit einem Gehäuse (101, 201, 301), mit wenigstens zwei Knöpfen (102, 104, 202, 204, 302, 304), die jeder einen Vorgang steuern, mit Eingängen/Ausgängen (105, 205, 305), einem Rechner (106, 206, 306), Speichermitteln (107, 108, 207, 208, 307, 308), einer elektrischen Speisung (109, 209, 309) und einem Zeitgeber (110, 210, 310), **dadurch gekennzeichnet, dass** dieses Gerät ausserdem wenigstens drei Chronometer (111, 112, 113, 211, 311) aufweist, von denen der erste (111, 211, 311) durch Druck auf einen der erwähnten Steuerungsknöpfe (102, 104, 202, 204, 302, 304) initialisiert und aktiviert wird und die Dauer des erwähnten Drucks misst, und von denen jeder der anderen Chronometer (112, 113) demjenigen Vorgang zugeordnet ist, welcher durch einen der Steuerungsknöpfe mittels des Rechners (106,, 206, 306) gesteuert wird, derart, dass, wenn die Dauer des Drucks auf den Steuerungsknopf gleich einem vorbestimmter Sollwert oder grösser als dieser ist, der Chronometer (112, 113), welcher dem vom betätigten Steuerungsknopf ausgelösten Vorgang zugeordnet ist, initialisiert und aktiviert wird, um wiederholte, von dem Zeitgeber (110, 210, 310) getaktete Zählzyklen einer vorbestimmten Dauer auszuführen, wobei nach Ablauf jedes der Zyklen der Vorgang, dem der Chronometer zugeordnet ist, über den Ausgang (105) 205, 305) des Geräts gesteuert wird.

2. Steuerungsgerät nach Anspruch 1, **dadurch gekennzeichnet, dass** die Anzahl der jedem Vorgang zugeordneten Chronometer gleich der Häufigkeit ist, mit der dieser Vorgang während eines Zählzyklus gesteuert werden soll, und dass das Gerät ausserdem durch den Rechner gesteuerte Adressierungsmittel (212, 213, 215, 216, 312, 313, 315, 316) aufweist, welche es erlauben, jeden der erwähnten Chronometer auszuwählen, um ihn zu initialisieren und zu aktivieren, damit er aufeinander folgende Zählzyklen ausführt, derart, dass der Vorgang über den Ausgang (205)) des Geräts jedesmal gesteuert wird, wenn einer der zugeordneten Chronometer seinen Zählzyklus beendet.

3. Gerät nach Anspruch 2, **dadurch gekennzeichnet, dass** die Anzahl der jedem Vorgang zugeordneten Chronometer gleich acht ist und dass am Ende eines Adressierungszyklus der sieben ersten Chronometer der Rechner (306) einen Mittelwert der Werte der Zählung der sieben ersten, demselben Steuerungsvorgang zugeordnet Chronometer berechnet, welche aktiviert und initialisiert werden und den achten Chronometer mit diesem Mittelwert der Zählung aktivieren, derart, dass der Vorgang über den Ausgang (305) des Geräts jedesmal gesteuert wird, wenn der achte Chronometer einen Zyklus der Zählung des vorbestimmten Werts beendet.

4. Gerät nach einem der vorhergehenden Ansprüche, **dadurch gekennzeichnet, dass** der vorbestimmte Sollwert fünf Sekunden beträgt.

5. Gerät nach einem der vorhergehenden Ansprüche, **dadurch gekennzeichnet, dass** die Dauer eines Zählzyklus 24 Stunden beträgt.

6. Gerät nach einem der Ansprüche 2 bis 5, **dadurch gekennzeichnet, dass** die Chronometer in Tafeln (212, 213, 312, 313) angeordnet sind.

7. Gerät nach einem der vorhergehenden Ansprüche, **dadurch gekennzeichnet, dass** es ausserdem einen Schalter mit einer Stellung "Handbetrieb" und einer Stellung "automatischer Betrieb" aufweist, wobei in der Stellung "Handbetrieb" die Einwirkung der Chronometer ausgeschaltet ist, derart, dass ein effektiver Druck auf einen einen Vorgang steuernden Knopf (102, 104, 202, 204, 302, 304) diesen Vorgang über den Ausgang (105, 205, 305) steuert.

8. Verfahren zum Initialisieren eines Geräts nach einem der vorhergehenden Ansprüche, **gekennzeichnet durch** folgende Schritte:
(a) Betätigen eines der Steuerungsknöpfe des Geräts,
(b) Messen der Betätigungsdauer mit Hilfe eines ersten Chronometers,
(c) Vergleichen der Betätigungsdauer mit einem vorbestimmten Sollwert,
(d) sobald die Dauer der Knopfbetätigung wenigstens gleich der Dauer des vorbestimmten Sollwerts ist, erfolgt das Initialisieren und Aktivieren eines Zählzyklus eines dem betätigten Schalter zugeordneten Chronometers,
(e) Vergleichen des Werts der Zählung des initialisierten und aktivierten Chronometers mit dem Wert eines vorbestimmten Zählzyklus,
(f) sobald der Wert der Zählung gleich dem Wert des vorbestimmten Zählzyklus ist, erfolgt die Initialisierung und Aktivierung des Chronometers für einen neuen Zählzyklus,
(g) Senden des zugeordneten Befehls an den betätigten Schalter.

9. Verfahren nach Anspruch 9, **dadurch gekennzeichnet, dass** der Schritt (d) die folgenden Zwischenschritte umfasst:
(d1) sobald die Dauer der Knopfbetätigung wenigstens gleich der Dauer des vorbestimmten Sollwerts ist, erfolgt die Bestimmung des vom aktivierten Knopf gesteuerten Vorgangs,
(d2) Bestimmung des Werts der Adressierungsanzeige,
(d3) Initialisieren und Aktivieren eines Zählzyklus des Chronometers, den die Anzeige zeigt,
(d4) Weiterschalten der Anzeige um einen Schritt,
(d5) wenn die Anzeige grösser als ein vorbestimmter maximaler Wert ist, wird die Anzeige erneut initialisiert.

10. Verfahren nach Anspruch 9, **dadurch gekennzeichnet, dass** der Zwischenschritt (d5) die folgenden Schritte umfasst:
(1) wenn die Anzeige grösser als ein vorbestimmter maximaler Wert ist, erfolgt das Berechnen des mittleren Unterschieds aller einem Vorgang zugeordneter Chronometer,
(2) Initialisieren und Aktivieren eines Chronometers mit einem Zählzyklus unter Berücksichtigung des berechneten mittleren Unterschieds.

11. Verfahren nach einem der Ansprüche 8 bis 10, **dadurch gekennzeichnet, dass** der vorbestimmte Sollwert fünf Sekunden beträgt.

12. Verfahren nach einem der Ansprüche 8 bis 11, **dadurch gekennzeichnet, dass** der Wert eines vorbestimmten Zählzyklus 24 Stunden beträgt.

13. System zum Steuern eines Rollladens mit einem Motor, der eine Achse (R) antreibt, um welche sich ein Rollladen (V) aufrollt, **dadurch gekennzeichnet, dass** es ein Steuerungsgerät nach einem der Ansprüche 1 bis 7 und einen an den Ausgang (105, 205, 305) des Steuerungsgeräts angeschlossenen Piloten (114, 214, 314) aufweist, welcher den Motor als Funktion des vom Ausgang (105, 205, 305) des Steuerungsgeräts abgegebenen Befehls steuert.

## Claims

1. Control device comprising a box (101, 201, 301), at least two buttons (102, 104, 202, 204, 302, 304) each controlling an action, inputs/outputs (105, 205, 305), a computer chip (106, 206, 306), memory means (107, 108, 207, 208, 307, 308), a power supply (109, 209, 309), a clock (110, 210, 310), said device being **characterized in that** it furthermore comprises at least three chronometers (111, 112, 113, 211, 311), the first (111, 211, 311) of these chronometers being initialized and activated by pressing on one of said control buttons (102, 104, 202, 204, 302, 304) and measuring the duration of said pressing, and each of the other chronometers (112, 113) being associated with the action controlled by one of the control buttons by way of the computer chip (106, 206, 306), so that if the duration of pressing on the control button is equal to or greater than a specified preset, the chronometer (112, 113) associated with the action of the actuated control button is initialized and activated so as to effect repeated counting cycles of a specified duration, regulated by the clock (110, 210, 310), at the conclusion of each of which the action with which the chronometer is associated is instructed on the output (105, 205, 305) of the device.

2. Control device according to Claim 1, **characterized in that** the number of chronometers associated with each action is equal to the number of times that said action is to be instructed during a counting cycle, and **in that** the device furthermore comprises addressing means (212, 213, 215, 216, 312, 313, 315, 316) controlled by the computer chip making it possible to select each of said chronometers so as to initialize it and activate it so that it executes successive counting cycles so that the action is instructed on the output (205) of the device each time one of the associated chronometers terminates its counting cycle.

3. Device according to Claim 2, **characterized in that** the number of chronometers associated with each action is equal to eight, and **in that** at the end of a cycle of addressing of the first seven chronometers, the computer chip (306) calculates an average of the counting values of the first seven chronometers allocated to the same control action which are activated and initializes and activates the eighth chronometer with this average counting value, so that the action is instructed on the output (305) of the device each time the eighth chronometer terminates a counting cycle of specified value.

4. Device according to one of the preceding claims, **characterized in that** the specific preset is 5 seconds.

5. Device according to one of the preceding claims, **characterized in that** the duration of a counting cycle is 24 hours.

6. Device according to one of Claims 2 to 5, **characterized in that** the chronometers are placed in tables (212, 213, 312, 313).

7. Device according to one of the preceding claims, **characterized in that** it furthermore comprises a switch having a manual mode position and an automatic mode position, the manual mode position deactivating the influence of the chronometers so that just an actual pressing on an action control button (102, 104, 202, 204, 302, 304) instructs an action on the output (105, 205, 305) of the device.

8. Process for initializing a device according to one of the preceding claims, **characterized by** the following steps:
(a) action on one of the control buttons of the apparatus,
(b) measurement of the duration of the user's action by means of a first chronometer,
(c) comparison of the duration of the action with a specified preset,
(d) as soon as the duration of the action on the button is at least equal to the duration of the specified preset, initialization and activation of a counting cycle of a chronometer associated with the actuated switch,
(e) comparison of the counting value of the initialized and activated chronometer with the value of a specified counting cycle,
(f) as soon as the counting value is equal to the value of the specified counting cycle, initialization and activation of the chronometer in respect of a new counting cycle,
(g) sending of the associated control instruction to the actuated switch.

9. Process according to Claim 8, **characterized in that** step (d) comprises the following intermediate steps:
(d1) as soon as the duration of the action on the button is at least equal to the duration of the specified preset, determination of the action controlled by the activated button,
(d2) determination of the value of the addressing index,
(d3) initialization and activation of a counting cycle of the chronometer to which the index points,
(d4) increment of the index,
(d5) if the index is greater than a specified maximum value, reinitialization of the index.

10. Process according to Claim 9, **characterized in that** the intermediate step (d5) comprises the following steps:
(1) if the index is greater than a specified maximum value, calculation of the average deviation of all the chronometers associated with an action,
(2) initialization and activation of a chronometer with a counting cycle taking account of the calculated average deviation.

11. Process according to one of Claims 8 to 10, **characterized in that** the duration of the specified preset is 5 seconds.

12. Process according to one of Claims 8 to 11, **characterized in that** the value of a specified counting cycle is 24 hours.

13. Control system for roller blind, comprising a motor driving a spindle (R) around which is wound a roller blind (V), the system being **characterized in that** it comprises a control device according to one of Claims 1 to 7, a drive (114, 214, 314) linked to the output (105, 205, 305) of the control device, the drive (114, 214, 314) controlling the motor as a function of the control instruction emanating from the output (105, 205, 305) of the control device.
